# EUROPÄISCHE PATENTSCHRIFT

(11) **EP 2 107 442 B1**
(45) Veröffentlichungstag und Bekanntmachung des Hinweises auf die Patenterteilung: **23.11.2011**
(21) Anmeldenummer: 09002903.4
(22) Anmeldetag: 28.02.2009
(51) Int. Cl.: G05G 1/32, G05G 1/36

(54) **Kraftfahrzeug mit einem Fußhebelwerk**
Motor vehicles with a foot pedal assembly
Véhicules automobiles avec un mécanisme de levier de pédale

(30) Priorität: 31.03.2008 DE 102008016415
(43) Veröffentlichungstag der Anmeldung: 07.10.2009
(73) Patentinhaber: Volkswagen Aktiengesellschaft, 38436 Wolfsburg (DE)
(72) Erfinder: Tiemann, Jörg, 38154 Königslutter (DE); Steinmetz, Peter, 38108 Braunschweig (DE); Thiele, Frank, 38471 Rühen (DE)

(56) Entgegenhaltungen:
- DE-B4- 19 601 800
- DE-C- 835 840
- FR-A1- 2 739 077
- FR-A1- 2 740 882
- GB-A- 1 164 226
- US-A- 2 989 875

## Beschreibung

Die Erfindung betrifft ein Kraftfahrzeug mit einem Fußhebelwerk nach dem Oberbegriff des Patentanspruchs 1.

Fußhebelwerke an Kraftfahrzeugen mit einem oder mehreren Pedalen sind überwiegend an der vorderen Stirnwand der Fahrgastzelle abgestützt. Aus der Praxis ist es bekannt, dass im Falle eines etwaigen Frontalcrashes eine Verschiebung des Pedals, beispielsweise Bremspedals, in den Innenraum der Fahrgastzelle hinein zu verzeichnen ist. Dieser Umstand kann zu schweren Beinverletzungen des Fahrers führen. Um der besagten für den Fahrer nachteiligen Verlagerung des Pedals im Crashfall zu begegnen und damit das Verletzungsrisiko für denselben zu minimieren, sind die verschiedensten Lösungsvorschläge bekannt.

So ist aus der EP 0 805 080 B1 eine Tragstruktur für eine. Pedaleinrichtung des aufgehängten Typs eines Fahrzeugs bekannt, welche eine Pedalhalterung, die an einem Fahrzeugaufbau befestigt ist, sowie eine aufwendige und kinematisch komplizierte so genannte Verschiebungssteuereinrichtung aufweist, die ihrerseits an einen hinteren Endabschnitt der Pedalhalterung derart gekoppelt ist, dass sie die Verschiebung einer Trittfläche der Pedaleinrichtung eines Fahrzeugs infolge einer Verschiebung der Verschiebungssteuereinrichtung im Wesentlichen in einer abwärtigen Richtung des Fahrzeugs aufgrund einer äußeren Kraft mit einem vorgegebenen Wert oder einem darüberliegenden Wert, die auf einen Frontabschnitt des Fahrzeugs einwirkt, steuert.

Weiter ist aus der DE 698 06 149 T2 eine Pedalanordnung für ein Kraftfahrzeug bekannt, mit einer Spritzwand sowie einer Quer-Traverse, die im Wesentlichen biegesteif ist, und mit einem Pedalträger für ein Pedal des aufgehängten Typs, der fest an der Spritzwand befestigt ist, wobei der Pedalhebel des Pedals an einem seiner Enden an dem Pedalträger angelenkt ist und an seinem anderen Ende eine Betätigungsplatte aufweist. Es ist des Weiteren wenigstens ein starres Kraftübertragungselement vorgesehen, welches an einem ersten seiner Enden an der Quer-Traverse angelenkt ist, wobei das zweite Ende des starren Kraftübertragungselements sich zwischen dem Pedalträger und dem Hebel des Pedals erstreckt. Fernerhin weist das zweite Ende des starren Kraftübertragungselements einen Anschlag auf, der direkt mit dem Hebel des Pedals zusammenwirkt, um ihn von einem feststehenden Punkt des Pedalträgers zu entfernen und an die Spritzwand anzunähern, wenn die Spritzwand nach einem Frontalaufprall des Fahrzeugs nach hinten beaufschlagt wird.

Beiden Lösungsvorschlägen ist gemein, dass diese lediglich auf ein einziges Pedal abstellen und somit eines erhöhten Aufwandes bedürfen, um alle in Frage kommenden Pedale, nämlich Brems- und Kupplungs- und/oder Gaspedal, wie vorgeschlagen derart abzustützen, dass dieselben nach einem Frontalaufprall zur Spritzwand hin bewegt respektive verschwenkt werden. Ferner ist es nicht ausgeschlossen, dass sich die in Rede stehenden Verschiebungssteuereinrichtung bzw. das Kraftübertragungselement im Crashfall aufgrund nicht vorher bestimmbarer Querkräfte, insbesondere dann, wenn ein von einem exakten Frontalcrash abweichendes Crashereignis zu verzeichnen ist, sich vom zugeordneten Pedal lösen und/oder sich mit dem Pedal verklemmt, wodurch die bestimmungsgemäße Funktion derselben behindert oder gar nicht mehr gewährleistet ist.

Um diesem Problem zu begegnen, beschreibt die DE 10 2006 014 228 A1 ein Fußhebelwerk an Kraftfahrzeugen, mit einem pedalseitig an einer Crashstrebe angeschlossenen Hakenelement, welches sich an der Pedalachse und/oder einem dieselbe tragenden Lagerbock formschlüssig abstützt. Hierdurch wird im Falle eines Crashereignisses eine Zwangsführung realisiert und ein Abrutschen der Crashstrebe von einem Pedalhebel und/oder ein Verbiegen und/oder Verklemmen der Crashstrebe verhindert. Ungeachtet dessen beschränkt sich diese Lösung nur auf ein Pedal. D. h., sollen mehrere Pedale derart abgestützt werden, sind eine entsprechende Anzahl besonders ausgebildeter Crashstreben vorzusehen.

Weitere Vorschläge zum Verschieben von Pedalen und/oder zum Lösen derselben aus ihrem Schwenklager sind aus der FR 2 739 077 A1 und der FR 2 740 882 A1 bekannt. Im Wesentlichen ist hier vorgesehen, dass im Falle eines Crashereignisses während der Intrusion der Spritzwand samt Pedallagerbock in die Fahrgastzelle eine ortsfeste Stütze entweder auf den das Pedal tragenden Pedallagerbock einwirkt, so dass das Pedal zur Seite verschoben wird oder auf den Lagerbolzen des Pedals derart einwirkt, dass sich dieser selbsttätig aus seiner Lagerung löst.

Ferner ist aus der DE 196 01 800 B4 eine Sicherheitseinrichtung für ein Fahrzeug bekannt, welche wenigstens einen innerhalb der Fahrgastzelle quer zur Fahrtrichtung verlaufenden und von der Spritzwand beabstandeten Querträger, der sich seinerseits beidenends an der Fahrzeugkarosserie abstützt, aufweist. Besagter Querträger ist geeignet, bei einer unfallbedingten Spritzwandintrusion direkt wenigstens einen aufgehängten Fußhebel derart zu beaufschlagen, das dieser während der Spritzwandintrusion in Richtung der Spritzwand verlagert wird. Der Querträger ist aufgrund der Tatsache, dass an demselben ein Lenksäulenlager befestigt ist, über eine Strebe an einem Mitteltunnel abgestützt.

Vor diesem Hintergrund ist es Aufgabe der Erfindung, ein Kraftfahrzeug mit einem Fußhebelwerkwerk zu schaffen, welches im Crashfall eine ausreichende Wirkverbindung zwischen einer Crashstrebe und zumindest zwei Pedalhebeln gewährleistet und im Ergebnis die Intrusion der betreffenden Pedale in die Fahrgastzelle auch infolge eines von einem exakten Frontalcrash abweichenden Crashereignisses wirkungsvoll vermeidet.

Ausgehend von einem Kraftfahrzeug mit einem Fußhebelwerk, das zumindest zwei Pedalhebel aufweist, welche jeweils an einem oder an einem gemeinsamen Lagerbock hängend schwenkgelagert sind, wobei der betreffende Lagerbock an einer Stirnwand einer Fahrgastzelle des Kraftfahrzeugs befestigt ist, und wobei fahrgastzellenseitig in einer bestimmten Beabstandung zum Lagerbock ein auch während eines Crashereignisses, insbesondere Frontalcrashes, weitestgehend ortsfestes Karosserieteil vorgesehen ist, an welchem eine starre Crashstrebe fest angeordnet ist, die sich ihrerseits so weit nach vorn in Richtung der zumindest zwei Pedalhebel erstreckt, dass im Crashfall, einhergehend mit einer Intrusion des Lagerbockes in die Fahrgastzelle eine Wirkverbindung zwischen den zumindest zwei Pedalhebeln und der Crashstrebe sowie eine Schwenkbewegung der betreffenden Pedalhebel entgegen der Intrusionsrichtung bewirkt ist, wird die gestellte Aufgabe dadurch gelöst, dass die Crashstrebe durch eine Befestigungsstrebe gebildet ist, die einenends am weitestgehend ortsfestesn Karosserieteil abgestützt ist und anderenends sich in zwei in Fahrzeugquerrichtung erstreckende frei auskragende Stützstreben aufgabelt, die ihrerseits im Crashfall mit den zumindest zwei Pedalhebeln in Wirkverbindung treten.

Durch diese Maßnahme ist gestattet, dass die Crashstrebe respektive deren auskragende Stützstreben im Crashfall mit zumindest zwei Pedalhebeln in Wirkverbindung treten, wodurch eine weitestgehend gleichmäßige Kraftverteilung auf besagte Stützstreben zu verzeichnen und ein undefiniertes Verdrehen der Crashstrebe innerhalb einer in Fahrzeugquerrichtung ausgerichteten Hochebene verhindert, zumindest jedoch maßgeblich gemindert ist. Es ist somit weitestgehend ausgeschlossen, dass sich die Stützstreben vom jeweils zugeordneten Pedal lösen bzw. von diesem abrutschen und/oder sich mit dem/n Pedalhebel/n verklemmen, wodurch die bestimmungsgemäße Funktion derselben behindert oder gar nicht mehr gewährleistet wäre.

Die Unteransprüche beschreiben bevorzugte Weiterbildungen oder Ausgestaltungen der Erfindung.

Danach können die Pedalhebel von einem Bremspedal und einem Kupplungspedal und/oder einem Gaspedal gebildet sein. Um eine größtmögliche Sicherheit im Hinblick der Vermeidung eines Abrutschens der Stützstreben von den Pedalhebeln zu erlangen, können besagte Stützstreben vorteilhaft zumindest an ihrem freien Ende jeweils eine Abwinkelung aufweisen, wobei derartige Abwinkelungen im Falle eines Crashereignisses eine Zwangsführung realisierend und ein Abrutschen der Stützstreben von den Pedalhebeln und/oder ein Verbiegen und/oder Verklemmen der Stützstreben verhindernd, in Fahrzeugquerrichtung gesehen um die jeweils außen angeordneten und abzustützenden Pedalhebel teilweise herumgeführt sind und in Richtung der Fahrzeugfront weisen. Unter außen angeordnete und abzustützende Pedalhebel wird verstanden, dass bei drei abzustützenden Pedalhebeln (Kupplungs-, Brems- und Gaspedal) die besagten Abwinkelungen um die Pedalhebel des Kupplungs- und Gaspedals herumgeführt sind. Sollen dagegen lediglich zwei Pedalhebel, beispielsweise die Pedalhebel eines Kupplungs- und Bremspedals abgestützt werden, versteht es sich von selbst, dass um jeden abzustützenden Pedalhebel eine Abwinkelung herumgeführt ist. Durch die Erfindung mit erfasst ist jedoch auch ein Zustand, bei dem bei drei abzustützenden Pedalhebeln (Kupplungs-, Brems- und Gaspedal) jedem Pedalhebel, demgemäß auch dem Pedalhebel des mittleren Pedals, vorliegend des Bremspedals, zumindest eine Abwinkelung, ggf. auch je zwei Abwinkelungen als seitliche Stützen zugeordnet sind. Weiter vorteilhaft ist die Erstreckung der Abwinkelungen in Richtung der Fahrzeugfront derart gewählt, dass zwar besagte Zwangsführung der Pedalhebel gewährleistet, jedoch eine Beabstandung zur Stirnwand der Fahrgastzelle gegeben ist, die im Crashfall eine Crashenergie absorbierende Verformung der Stirnwand erlaubt. Wie die Erfindung noch vorsieht, kann das weitestgehend ortsfeste Karosserieteil durch einen an sich bekannten und sowieso vorhandenen Modulquerträger gebildet sein, der sich seinerseits an der Karosserie des Kraftfahrzeugs abstützt. Was die Crashstrebe selbst anbelangt, kann diese ein oder mehrteilig als Drahtbiegeteil, Blechformteil oder Gussteil oder auch durch eine Kombination derartiger Teile gebildet sein.

Die Erfindung wird nachstehend anhand eines in den Zeichnungen schematisch dargestellten Ausführungsbeispieles näher erläutert. Es zeigen:
- Fig. 1: die perspektivische Draufsicht auf ein erfindungsgemäß ausgestattetes Fußhebelwerk eines Kraftfahrzeugs mit einer erfindungswesentlichen Crashstrebe,
- Fig. 2: äußerst schematisch eine Seitenansicht auf das Fußhebelwerk nach Fig.1 im Normalbetrieb,
- Fig. 3: eine Seitenansicht auf das Fußhebelwerk nach Fig. 2 während eines Crashereignisses,
- Fig. 4: die perspektivische Rückansicht der Crashstrebe als Einzelteil,
- Fig. 5: die perspektivische Vorderansicht der Crashstrebe als Einzelteil.

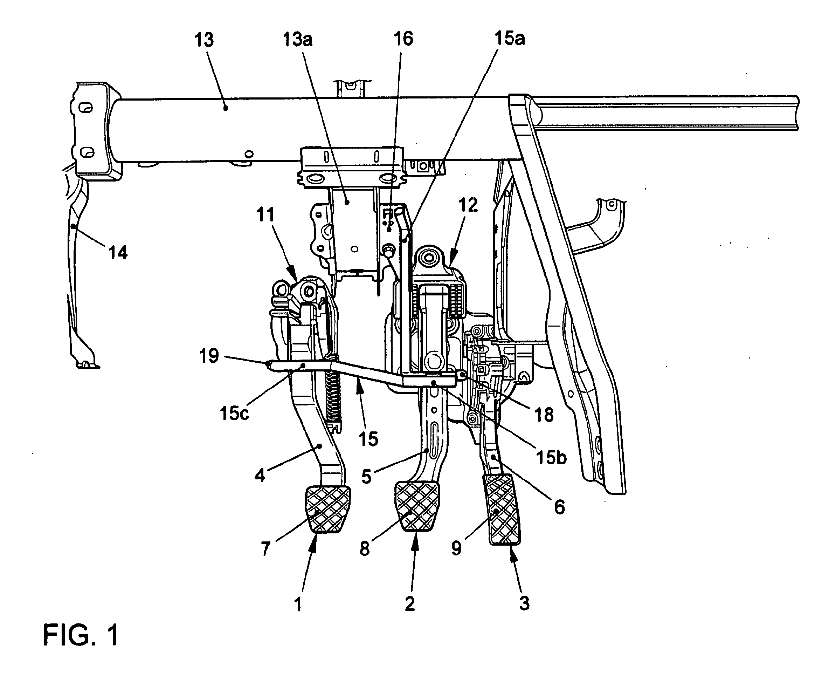

Fig. 1 zeigt ein in ein Kraftfahrzeug eingebautes Fußhebelwerk, mit drei Pedalen 1, 2, 3, nämlich einem Kupplungspedal 1, einem Bremspedal 2 und einem Gaspedal 3. Die Pedale 1, 2, 3 sind vom aufgehängten Typ und verfügen jeweils über einen Pedalhebel 4, 5, 6 und eine Pedalplatte 7, 8, 9, auf welcher der Betätigungsfuß des Fahrzeugführers aufgesetzt wird.

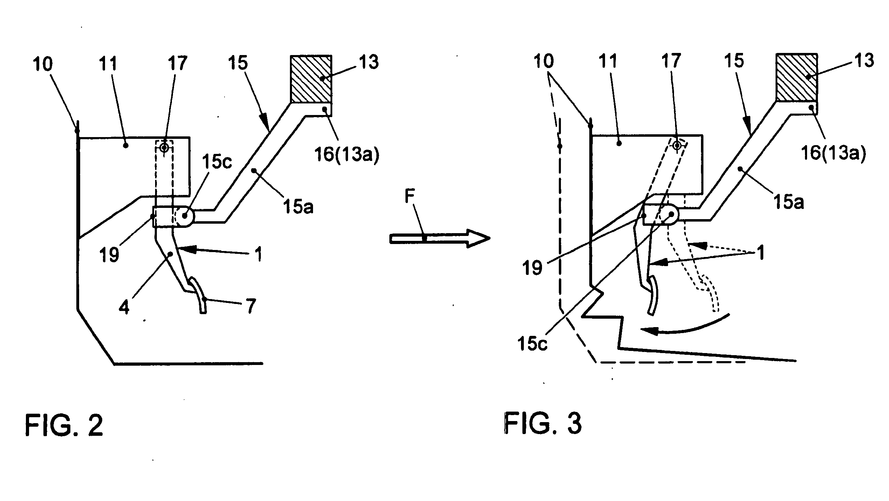

Der Pedalhebel 4, 5, 6 ist seinerseits in einem fest mit der in Fig. 1 nicht näher dargestellten, jedoch in den Fig. 2 und 3 gezeigten Stirnwand 10 der Fahrgastzelle des Kraftfahrzeugs fest verbundenen Lagerbock 11, 12 schwenkgelagert, wobei vorliegend das Kupplungspedal 1 an einem separaten Lagerbock 11 und das Brems- und Gaspedal 2, 3 an einem gemeinsamen Lagerbock 12 schwenkgelagert sind.

In einer bestimmten Beabstandung zu den Lagerböcken 11, 12 ist fahrgastzellenseitig ein während eines etwaigen Frontalcrashes weitestgehend ortsfestes Karosserieteil 13, vorliegend in Form eines Modulquerträgers, angeordnet, welches/r sich beidenends an der Karosserie 14 des Kraftfahrzeugs abstützt.

An besagtem Karosserieteil 13 respektive Modulquerträger ist über ein Anschlussteil 13a des Karosserieteils 13 ferner eine lang gestreckte Crashstrebe 15 abgestützt.

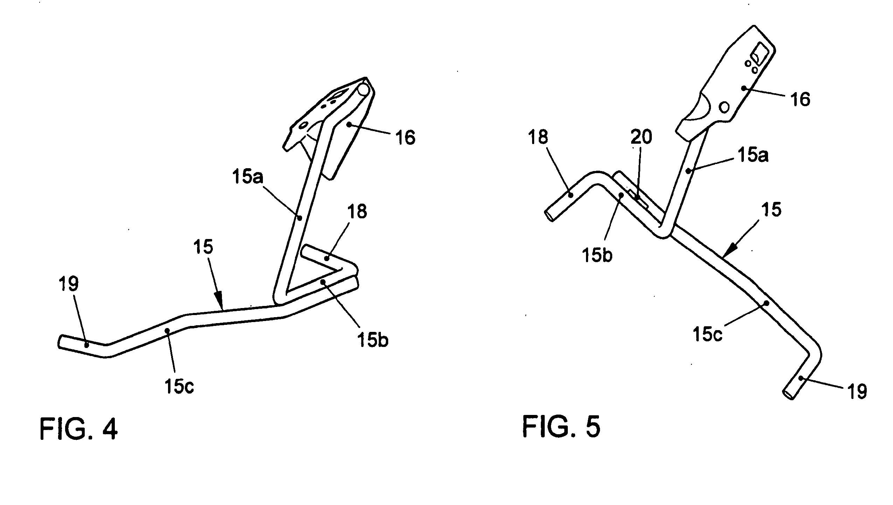

Wie den Fig. 1 bis 5 weiter zu entnehmen ist, weist die Crashstrebe 15 eine Befestigungsstrebe 15a auf, die einenends mittels eines Befestigungselementes 16 über das Anschlussteil 13a des weitestgehend ortsfesten Karosserieteils 13 respektive des Modulquerträgers an demselben festgelegt ist.

Anderenends gabelt sich die Befestigungsstrebe 15a in zwei in Fahrzeugquerrichtung erstreckende frei auskragende Stützstreben 15b, 15c auf, die ihrerseits vorliegend geeignet sind, im Crashfall mit den Pedalhebeln 4, 5 des Kupplungs- und Bremspedals 1, 2 in Wirkverbindung zu treten.
Im Wesentlichen ist durch diese Anordnung bezweckt, dass während des Auftreffens der Pedalhebel 4, 5 auf die Stützstreben 15b, 15c der Crashstrebe 15 die Pedalhebel 4, 5 entgegen der Intrusionsrichtung um die jeweilige Pedalachse 17 verschwenkt werden.

Die Funktionsweise der Erfindung ist äußerst schematisch den Fig. 2 und 3 zu entnehmen. Fig. 2 zeigt dabei die Seitenansicht auf das Kupplungspedal 1 des Fußhebelwerks im Normalbetrieb.

Gesetzt den Fall, es wirkt infolge eines Crashereignisses, insbesondere Frontalcrashes, entgegen der Fahrtrichtung eine Kraft "F" auf die Stirnwand 10 der Karosserie 14 des Kraftfahrzeugs und verformt dieselbe, so kann die Stirnwand 10 samt des angeschlossenen Fußhebelwerks in nachteiliger Weise entgegen der Fahrtrichtung in die Fahrgastzelle hinein versetzt werden. In der Folge treten die Stützstreben 15b, 15c vorliegend mit den Pedalhebeln 4, 5 des Kupplungs- und Bremspedals 1, 2 derart in Wirkverbindung, dass dieselben entgegen der Intrusionsrichtung verschwenkt werden.

Wie bereits oben ausgeführt, ist durch diese Maßnahme eine weitestgehend gleichmäßige Kraftverteilung auf die beiden Stützstreben 15b, 15c zu verzeichnen und ein undefiniertes Verdrehen der Crashstrebe 15 innerhalb einer in Fahrzeugquerrichtung ausgerichteten Hochebene verhindert, zumindest jedoch maßgeblich gemindert. Es ist somit weitestgehend ausgeschlossen, dass sich die Stützstreben 15b, 15c vom jeweils zugeordneten Pedalhebel 4, 5 der Pedale 1, 2 lösen bzw. von diesen abrutschen und/oder sich mit den Pedalhebeln 4, 5 verklemmen, wodurch die bestimmungsgemäße Funktion derselben behindert oder gar nicht mehr gewährleistet wäre.

Um eine weiter erhöhte Sicherheit im Hinblick auf ein nachteiliges Abrutschen der Stützstreben 15b, 15c von den Pedalhebeln 4, 5 zu erlangen, kann es angezeigt sein, wie in den Fig. 1 bis 5 gezeigt, dass die Stützstreben 15b, 15c zumindest an ihrem freien Ende jeweils eine Abwinkelung 18, 19 aufweisen. Im Falle eines Crashereignisses realisieren derartige Abwinkelungen 18, 19 eine Zwangsführung und verhindern wirkungsvoll ein Abrutschen der Stützstreben 15b, 15c von den Pedalhebeln 4, 5 und/oder ein Verbiegen und/oder Verklemmen der Stützstreben 15b, 15c, indem in Fahrzeugquerrichtung gesehen die Abwinkelungen 18, 19 jeweils um die außen angeordneten und abzustützenden Pedalhebel 4, 5 teilweise herumgeführt sind und in Richtung der Fahrzeugfront weisen. Besagte Abwinkelungen 18, 19 fungieren sozusagen als seitliche Stützen.

Unter außen angeordnete und abzustützende Pedalhebel 4, 5 wird verstanden, dass bei ggf. drei abzustützenden Pedalhebeln 4, 5, 6 (Kupplungs-, Brems und Gaspedal 1, 2, 3) die besagten Abwinkelungen 18, 19 um die Pedalhebel 4 und 6 des Kupplungs- und Gaspedals 1, 3 herumgeführt sind (nicht näher dargestellt).

Sollen dagegen wie gezeigt, lediglich zwei Pedalhebel 4, 5, nämlich wie vorliegend die Pedalhebel 4, 5 eines Kupplungs- und Bremspedals 1, 2 abgestützt werden, versteht es sich von selbst, dass um jeden abzustützenden Pedalhebel 4, 5 des Kupplungs- und Bremspedals 1, 2, wobei dann beide benachbarten Pedalhebel 4, 5 als äußere Pedalhebel 4, 5 zu betrachten sind, eine Abwinkelung 18, 19 herumgeführt ist.

Vorstehendes Ausführungsbeispiel stellt auf ein Fußhebelwerk eines Kraftfahrzeugs mit Schaltgetriebe und hängendem Gaspedal 3 ab. Die Erfindung erfasst jedoch auch Kraftfahrzeuge mit Schaltgetriebe und so genannter stehender Pedalplatte 9 des Gaspedals 3 (nicht hängendes Pedal 3), wobei dann lediglich die Pedalhebel 4, 5 des Kupplungs- und Bremspedals 1, 2 erfindungsgemäß abstützbar sind. Ebenso sind auch Fußhebelwerke für Kraftfahrzeuge mit automatischen Getriebe mit erfasst, bei denen ein Kupplungspedal 1 vermieden ist. In diesem Fall können die Pedalhebel 5, 6 eines hängendes Brems- und Gaspedals 2, 3 erfindungsgemäß abgestützt sein (nicht näher dargestellt).

Durch die Erfindung mit erfasst ist schließlich auch ein nicht näher gezeigter Zustand, bei dem bei drei abzustützenden Pedalhebeln 4, 5, 6 (Kupplungs-, Brems- und Gaspedal 1, 2, 3) jedem Pedalhebel 4, 5, 6, demgemäß auch dem Pedalhebel 5 des mittleren Pedals 2 (Bremspedal 2), zumindest eine Abwinkelung, ggf. auch je zwei Abwinkelungen als seitliche Stützen zugeordnet sind, wobei als außenliegende Abwinkelung 18, 19 oder jede weitere Abwinkelung auch abgestellte und ggf. separat gefügte Stützen verstanden werden.

Für den Fachmann sicherlich leicht nachvollziehbar, sollte die Erstreckung der Abwinkelungen 18, 19 in Richtung der Fahrzeugfront derart gewählt sein, dass zwar besagte Zwangsführung der vorliegend abgestützten Pedalhebel 4, 5 gewährleistet, jedoch eine Beabstandung zur Stirnwand 10 der Fahrgastzelle gegeben ist, die im Crashfall eine Crashenergie absorbierende Verformung der Stirnwand 10 noch erlaubt.

Wie insbesondere den Fig. 1, 4 und 5 schließlich noch entnehmbar ist, ist die Crashstrebe 15 vorliegend als mehrteiliges Drahtbiegeteil ausgebildet, wobei ein Teil durch die Befestigungsstrebe 15a und die Stützstrebe 15b und das andere Teil durch die Stützstrebe 15c gebildet ist. Beide Teile sind zweckmäßigerweise durch eine Schweißverbindung 20 gefügt.

Demgegenüber kann die Crashstrebe 15 auch als einteiliges Drahtbiegeteil oder als ein oder mehrteiliges Blechformteil oder Gussteil oder durch eine Kombination der vorerwähnten Teile gebildet sein (nicht näher dargestellt).

### Bezugszeichenliste

- 1: Pedal (Kupplungspedal)
- 2: Pedal (Bremspedal)
- 3: Pedal (Gaspedal)
- 4: Pedalhebel (Kupplungspedal 1)
- 5: Pedalhebel (Bremspedal 2)
- 6: Padalhebel (Gaspedal 3)
- 7: Pedalplatte (Kupplungspedal 1)
- 8: Pedalplatte (Bremspedal 2)
- 9: Pedalplatte (Gaspedal 3)
- 10: Stirnwand
- 11: Lagerbock (Kupplungspedal 1)
- 12: Lagerbock (Brems-, Gaspedal 2, 3)
- 13: Karosserieteil
- 13a: Anschlussteil (Karosserieteil 13)
- 14: Karosserie
- 15: Crashstrebe
- 15a: Befestigungsstrebe
- 15b: Stützstrebe
- 15c: Stützstrebe
- 16: Befestigungselement (Befestigungsstrebe 15a)
- 17: Pedalachse
- 18: Abwinkelung
- 19: Abwinkelung
- 20: Schweißverbindung

## Patentansprüche

1. Kraftfahrzeug mit einem Fußhebelwerk, das zumindest zwei Pedalhebel (4, 5, 6) aufweist, welche ihrerseits jeweils an einem oder an einem gemeinsamen Lagerbock (11, 12) hängend schwenkgelagert sind, wobei der betreffende Lagerbock (11, 12) an einer Stirnwand (10) einer Fahrgastzelle des Kraftfahrzeugs befestigt ist, und wobei fahrgastzellenseitig in einer bestimmten Beabstandung zum Lagerbock (11, 12) ein auch während eines Crashereignisses, insbesondere Frontalcrashes, weitestgehend ortsfestes Karosserieteil (13) vorgesehen ist, an welchem eine starre Crashstrebe (15) fest angeordnet ist, die sich ihrerseits so weit nach vorn in Richtung der zumindest zwei Pedalhebel (4, 5, 6) erstreckt, dass im Crashfall, einhergehend mit einer Intrusion des Lagerbockes (11, 12) in die Fahrgastzelle eine Wirkverbindung zwischen den zumindest zwei Pedalhebeln (4, 5, 6) und der Crashstrebe (15) sowie eine Schwenkbewegung der betreffenden Pedalhebel (4, 5, 6) entgegen der Intrusionsrichtung bewirkt ist, **dadurch gekennzeichnet, dass** die Crashstrebe (15) durch eine Befestigungsstrebe (15a) gebildet ist, die einenends am weitestgehend ortsfesten Karosserieteil (13) abgestützt ist und anderenends sich in zwei in Fahrzeugquerrichtung erstreckende frei auskragende Stützstreben (15b, 15c) aufgabelt, die ihrerseits im Crashfall mit den zumindest zwei Pedalhebeln (4, 5, 6) in Wirkverbindung treten.

2. Kraftfahrzeug nach Anspruch 1, **dadurch gekennzeichnet, dass** die Pedalhebel (4, 5, 6) von einem Bremspedal (2) und einem Kupplungspedal (1) und/oder einem Gaspedal (3) gebildet sind.

3. Kraftfahrzeug nach Anspruch 1 oder 2, **dadurch gekennzeichnet, dass** die Stützstreben (4, 5, 6) zumindest an ihrem freien Ende jeweils eine Abwinkelung (18, 19) aufweisen, wobei derartige Abwinkelungen (18, 19) im Falle eines Crashereignisses eine Zwangsführung realisierend und ein Abrutschen der Stützstreben (15b, 15c) von den Pedalhebeln (4, 5, 6) und/oder ein Verbiegen und/oder Verklemmen der Stützstreben (15b, 15c) verhindernd, um die jeweils außen angeordneten abzustützenden Pedalhebel (4, 5, 6) teilweise herumgeführt sind und in Richtung der Fahrzeugfront weisen.

4. Kraftfahrzeug nach Anspruch 3, **dadurch gekennzeichnet, dass** die Erstreckung der Abwinkelungen (18, 19) in Richtung der Fahrzeugfront derart gewählt ist, dass zwar besagte Zwangsführung der Pedalhebel (4, 5, 6) gewährleistet, jedoch eine Beabstandung zur Stirnwand (10) der Fahrgastzelle gegeben ist, die im Crashfall eine Crashenergie absorbierende Verformung der Stirnwand (10) erlaubt.

5. Kraftfahrzeug nach einem der Ansprüche 1 bis 4, **dadurch gekennzeichnet, dass** das weitestgehend ortsfeste Karosserieteil (13) durch einen Modulquerträger gebildet ist, der sich seinerseits an der Karosserie (14) des Kraftfahrzeugs abstützt.

6. Kraftfahrzeug nach einem der Ansprüche 1 bis 5, **dadurch gekennzeichnet, dass** die Crashstrebe (15) ein oder mehrteilig als Drahtbiegeteil, Blechformteil oder Gussteil oder durch eine Kombination derartiger Teile gebildet ist.

## Claims

1. Motor vehicle with a foot pedal assembly which has at least two pedal levers (4, 5, 6) which, for their part, are mounted pivotally suspended in each case on a bracket or on a common bracket (11, 12), wherein the bracket (11, 12) in question is fastened to a front wall (10) of a passenger cell of the motor vehicle, and wherein a body part (13) is provided on the passenger cell side at a certain distance from the bracket (11, 12), which body part is very substantially fixed in position even during a crash event, in particular frontal crash, and on which a rigid crash strut (15) is fixedly arranged, which crash strut, for its part, extends forward in the direction of the at least two pedal levers (4, 5, 6) to such an extent that, in the event of a crash, associated with the bracket (11, 12) intruding into the passenger cell, an operative connection is brought about between the at least two pedal levers (4, 5, 6) and the crash strut (15), and a pivoting movement of the pedal levers (4, 5, 6) in question counter to the direction of intrusion is brought about, **characterized in that** the crash strut (15) is formed by a fastening strut (15a) which is supported at one end on the body part (13), which is very substantially fixed in position and, at the other end, is forked into two freely projecting supporting struts (15b, 15c) which extend in the transverse direction of the vehicle and, for their part, enter into an operative connection with the at least two pedal levers (4, 5, 6) in the event of a crash.

2. Motor vehicle according to Claim 1, **characterized in that** the pedal levers (4, 5, 6) are formed by a brake pedal (2) and a clutch pedal (1) and/or an accelerator pedal (3).

3. Motor vehicle according to Claim 1 or 2, **characterized in that** the supporting struts (4, 5, 6) each have an angled portion (18, 19) at least at the free end thereof, wherein, in the event of a crash event, angled portions (18, 19) of this type are partially guided around the pedal levers (4, 5, 6), which are each arranged on the outside and are to be supported, and point in the direction of the front of the vehicle, in a manner realizing forced guidance and preventing the supporting struts (15b, 15c) from slipping off the pedal levers (4, 5, 6) and/or preventing the supporting struts (15b, 15c) from bending and/or becoming jammed.

4. Motor vehicle according to Claim 3, **characterized in that** the extent of the angled portions (18, 19) in the direction of the front of the vehicle is selected in such a manner that, although said forced guidance of the pedal levers (4, 5, 6) is ensured, a distance is provided from the front wall (10) of the passenger cell, said distance permitting crash-energy-absorbing deformation of the front wall (10) in the event of a crash.

5. Motor vehicle according to one of Claims 1 to 4, **characterized in that** the very substantially positionally fixed body part (13) is formed by a module cross member, which, for its part, is supported on the motor vehicle body (14).

6. Motor vehicle according to one of Claims 1 to 5, **characterized in that** the crash strut (15) is formed by one or more parts in the form of a wire bent part, sheet-metal shaped part or cast part or by a combination of such parts.

## Revendications

1. Véhicule automobile avec un mécanisme de levier de pédale, qui présente au moins deux leviers de pédale (4, 5, 6), qui sont montés à pivotement de manière suspendue à chaque fois sur un support de palier respectif ou commun (11, 12), le support de palier concerné (11, 12) étant fixé sur une paroi frontale (10) d'un habitacle de conduite du véhicule automobile, et, du côté de l'habitacle de conduite, à distance déterminée du support de palier (11, 12), étant prévue une pièce de carrosserie (13) essentiellement fixe, même pendant un événement de collision, notamment de collision frontale, sur laquelle est disposée fixement une barre anticollision rigide (15) qui s'étend pour sa part vers l'avant dans la direction des au moins deux leviers de pédale (4, 5, 6) sur une distance telle qu'en cas de collision, associée à une intrusion du support de palier (11, 12) dans l'habitacle de conduite, on obtienne une liaison fonctionnelle entre les au moins deux leviers de pédale (4, 5, 6) et la barre anticollision (15) ainsi qu'un mouvement de pivotement des leviers de pédale concernés (4, 5, 6) à l'encontre de la direction d'intrusion, **caractérisé en ce que** la barre anticollision (15) est formée par une barre de fixation (15a) qui est supportée à une extrémité sur la partie de carrosserie essentiellement fixe (13) et qui se divise à l'autre extrémité en deux barres de support (15b, 15c) saillant librement s'étendant dans la direction transversale du véhicule, qui, pour leur part, en cas de collision, entrent en liaison fonctionnelle avec les au moins deux leviers de pédale (4, 5, 6).

2. Véhicule automobile selon la revendication 1, **caractérisé en ce que** les leviers de pédale (4, 5, 6) sont formés par une pédale de frein (2) et une pédale d'embrayage (1) et/ou une pédale d'accélération (3).

3. Véhicule automobile selon la revendication 1 ou 2, **caractérisé en ce que** les barres de support (15b, 15c) présentent au moins à leur extrémité libre à chaque fois un coude (18, 19), de tels coudes (18, 19), dans le cas d'un événement de collision, tout en réalisant un guidage forcé et en empêchant un glissement des barres de support (15b, 15c) des leviers de pédale (4, 5, 6) et/ou un gauchissement et/ou un coincement des barres de support (15b, 15c), étant guidés en partie autour des leviers de pédale (4, 5, 6) à supporter, disposés à chaque fois à l'extérieur, et étant tournés dans la direction de l'avant du véhicule.

4. Véhicule automobile selon la revendication 3, **caractérisé en ce que** l'étendue des coudes (18, 19) dans la direction de l'avant du véhicule est choisie de telle sorte que certes, ledit guidage forcé des leviers de pédale (4, 5, 6) soit garanti, mais qu'un espacement par rapport à la paroi frontale (10) de l'habitacle de conduite soit donné, lequel permet, en cas de collision, une déformation de la paroi frontale (10) absorbant l'énergie de collision.

5. Véhicule automobile selon l'une quelconque des revendications 1 à 4, **caractérisé en ce que** la partie de carrosserie (13) essentiellement fixe est formée par une traverse modulaire qui s'appuie pour sa part contre la carrosserie (14) du véhicule automobile.

6. Véhicule automobile selon l'une quelconque des revendications 1 à 5, **caractérisé en ce que** la barre anticollision (15) est formée en une ou plusieurs pièces sous forme de pièce cintrée en fil métallique, de pièce en tôle façonnée ou de pièce de fonte, ou par une combinaison de telles pièces.
